# EUROPEAN PATENT SPECIFICATION

(11) **EP 1 878 314 B1**
(45) Date of publication and mention of the grant of the patent: **03.12.2014**
(21) Application number: 06753431.3
(22) Date of filing: 27.04.2006
(51) Int. Cl.: H05B 7/14, H05B 7/085, F16B 7/02, F16B 7/18

(54) **ELECTRODE JOINT**
ELEKTRODENVERBINDUNG
RACCORD POUR ELECTRODES

(30) Priority: 28.04.2005 US 675596 P
(43) Date of publication of application: 16.01.2008
(73) Proprietor: SGL Carbon SE, 65201 Wiesbaden (DE)
(72) Inventor: MONTMINY, John, Mooresville, NC 28117 (US); MORRIS, Edward, G., Johnson City, TN 37601 (US); PRICE, Alan, Hickory, NC 28601 (US)
(86) International application number: PCT/EP2006/003923
(87) International publication number: WO 2006/114315

(56) References cited:
- EP-A- 0 085 993
- EP-A- 0 653 901
- JP-A- H10 321 364
- US-A- 2 957 716
- US-A- 3 540 764
- US-A- 3 771 887
- US-A- 4 191 486

## Description

### Background of the Invention:

### Field of the Invention:

The invention relates to carbon or graphite electrode columns with a threaded joint that is combining the advantages of traditional electrode-nipple joints as well as of male/female electrode joints. In particular the invention relates to carbon or graphite electrode columns comprising nipples having at their equator 80 to 110% the diameter of the connected electrodes.

The technique of manufacturing carbonized or graphitized carbon, also including carbon electrodes and connecting pins therefor, has been known in the art for over a hundred years and it is applied on a large industrial scale. Accordingly, it has been refined in many respects and optimized in terms of costs. One description of this technology may be found in ULLMANN'S ENCYCLOPEDIA OF INDUSTRIAL CHEMISTRY, Vol. A5, VCH Verlagsgesellschaft mbH, Weinheim, 1986, pp. 103-113.

US 2,957,716 relates to a butt joint between graphite or other carbon electrodes for electric furnaces, such butt joints serving to join a new electrode with the end of the nearly consumed electrode to permit a continuous furnace operation by replenishing the electrode material in accordance with the rate of consumption.

EP 0653901 describes an electrode joint for threadably joining two abutting carbon electrode sections with an elongate carbon fastening element which is force fitted into a passage extending from the outside of the electrode joint through a portion of the interface contact between the abutting carbon electrode sections.

An arc furnace contains at least one column of carbon electrodes. The upper end of such a column is retained by a bracket, through which the electrical current for the electrode column is also supplied. When the furnace is in use, the electric arc passes from the bottom tip or lower end of the column into the metal for melting that is located in the furnace. The electric arc and the high temperatures in the furnace cause the bottom end of the electrode column to burn away slowly. Eventually, as the electrode column is consumed, a new electrode section is added by joining it to the upper end of the upper electrode section of the electrode column. Thus, adequate electrode column length is assured by adding new electrode sections to the top of the electrode column, which protrudes through the furnace roof.

A common method of joining the two electrode sections together is by use of a threaded nipple (connecting pin). The nipple is screwed into correspondingly threaded sockets provided in the end faces of the two electrode sections. The threaded portions may be cylindrical. In most applications a tapered, threaded nipple is used for its superior strength. Such prior art nipples have at their equator 40 to 70% of the diameter of the connected electrodes.

The electrodes are screwed to a column either by hand or with a machine. Particularly in the case of electrodes having a large diameter of 600 mm or more, significant forces and turning moments or screwing effort must be applied in order to ensure that an electrode column will not come apart. Secure attachment of a column is vitally important for the functioning of an arc furnace.

When an arc furnace is in use, considerable flexing moments are exerted repeatedly on the electrode column due to the oscillation of the furnace casing including the column, or the column is subjected to constant vibration; the column is exposed to impacts from the charge material, which also places stresses on the secure attachment of the column. All such stresses - repeated flexing moments, vibrations and impacts - are capable of causing the threaded connection of electrodes to loosen. Loosening must be considered to be the result of unavoidable and/or undesirable processes.

When a screw connection becomes loose, the nipple is usually exposed to a high thermal and mechanical load. Ultimately, mechanical failure of the nipple due to overheating and mechanical loading is to be expected. As a result, the lower end of the electrode column breaks off and falls into the molten steel, the electric arc is interrupted and the smelting process is terminated.

Further, the nipple has to exhibit considerably higher mechanical strength than the electrodes since it has to hold the entire weight of the lower part of the adjacent electrode column. As a consequence, the nipple has material properties different from those of the connected electrodes. For example, the nipple material is denser and has a different CTE (coefficient of thermal expansion).

Along with advancement of high-load operation of arc furnaces, the electrodes and nipples are exposed, in addition to mechanical load, to high electric load. Rupturing of the electrode occurs frequently and mostly in the joint area. It is known, that the temperature of the central portion of an electrode becomes higher in recent direct-current electric arc furnaces than in conventional alternating-current electric arc furnaces. The nipple, which is located in the central portion of an electrode, is therefore exposed to a high temperature, with the result of high thermal stresses that cause ruptures in the joint area especially since the nipple has a CTE different from the electrodes.

The consequences of electrode rupturing while the furnace is in operation are already described above.

In order to counter the problems of inadequate attachment, poor current transfer from one part of the electrode column to the next, and rupturing, a number of very different approaches have been instituted and implemented in the steelworks.

In another electrode joint design, no separate nipple is required. It comprises a machined threaded male surface at one end of the electrode (also referred to as "integrated nipple") and a threaded female surface at the opposite end of the electrode to receive a corresponding male end from the adjacent electrode. This so-called male/female electrode joint is well documented and has historically been the first electrode joint design. As an example, it has been subject to US Patent 863,674 granted in 1907.

JP10321264 discloses the use of male threaded parts having a diameter at the equator of up to 90% of the electrode diameter.

There are several technical advantages of the male/female joint design over a conventional nipple design:
- The contact area between the electrodes is maximized and the fully engaged threads and wedging thereof reduce electrical resistance of the joint;
- Due to the full engagement of the threads and the wedging effect, there is a resistance to unwinding of the joint;
- The physical properties of the nipple are identical to the socket, so material compatibility is not an issue as with conventional joints using a separate smaller nipple; and
- As a result, thermal stresses within the joint are minimized, thereby resulting in fewer material losses due to splitting and cracking.

However, there are also disadvantages associated with the male/female design:
- Higher assembly torque is required to exploit the lower joint resistance capabilities;
- Re-machining of salvaged electrodes following a joint failure is necessary;
- Cleaning of the threads before assembly is even more critical than for conventional electrode joints;
- Much higher machining losses are associated with each male/female joint, leading to higher costs; and
- The effective joint-to-joint distance for a given rough electrode length will be shortened due to geometry considerations-as a result there will be a further increase in machining losses due to the necessity for more joints, and more electrode production capacity would be required to maintain customer requirements.

For those disadvantages, the male/ female joint has been substituted in most arc furnace application by the nipple design several decades ago.

### Summary of the Invention:

It is an object of the invention to provide carbon and/or graphite electrode columns which overcome the above-mentioned most critical disadvantages, and yet maintain the most important advantages of the male/female electrode joint design, while overcoming the essential disadvantages of the conventional nipple joint design.

A "hybrid" design incorporating both conventional nipple and male/female joint design features is accordingly an object of this invention.

The proposed design, above, incorporates the concept of joining a plurality of electrodes, each having a socket on either end, with separate nipples-as in a conventional electrode joint-with several important differences:
- There is full thread engagement in both sockets (all nipple thread flanks are in full contact with all socket thread flanks such that there is no inter-flank spacing in a properly tightened joint);
- The equator of the connecting pin protrudes beyond the end faces of both connected electrodes, such that facial electrode contact is not possible, thereby allowing full thread engagement in both sockets as described, above;
- The major diameter of the nipple is much larger with respect to the electrode diameter than for a conventional joint;
- Because there is no facial electrode contact, all of the electrical current is carried through the nipple, as opposed to a conventional nipple-socket design, where most of the electrical current is carried through the electrode end-faces, which must be in tight contact with each other- the area of surface contact is larger for the hybrid design, and therefore the electrical resistance across the joint is lower than for a conventional nipple-socket design; and
- The connecting pin material is the same as the electrode material, such that there are virtually no differences in physical properties - as a result there are no connecting pin/socket material compatibility issues.

Such a hybrid joint configuration has the following important advantages:
- All of the performance advantages of a typical male/female electrode configuration will be retained;
- Electrodes may be salvaged without re-machining of the sockets; broken nipples may be replaced so that they may be reused; and
- Longer effective joint-to-joint lengths are possible using the same manufacturing equipment-therefore, the customer will consume fewer electrodes, and electrode manufacturing capacity decreases associated with typical male/female joints will be minimized.

Efficiencies of the hybrid joint may be further improved by optimizing the depth of the sockets , i.e. shallower sockets cause lower material losses, and by using the same raw electrode stock to machine the nipples.

Further performance improvements can be realized by adding a conductive material between the non-contacting electrode endfaces. Preferably this material comprises flexible graphite in the shape of a thick foil or a coil.

Furthermore, it is an also object of this invention to provide an improved male/ female joint. The proposed design, incorporates the concept of joining a plurality of electrodes, each having a socket on one end, with an integrated nipple at the other end - as in a conventional male/ female electrode joint - with the important difference that the equator of the integrated pin protrudes beyond the end faces of both connected electrodes, such that facial electrode contact is not possible. Because there is no facial electrode contact, all of the electrical current is carried through the integrated nipple, as opposed to a conventional male/ female design, where most of the electrical current is carried through the electrode end-faces, which must be in tight contact with each other- the area of surface contact is larger for the improved male/ female joint design, and therefore the electrical resistance across the joint is lower than for a conventional male/ female joint design.

With the foregoing and other objects in view there is provided, in accordance with the invention, an assembly with a threaded connection, comprising:
an outer part made from ceramic and having an axial tapered internal thread;
an inner part made from ceramic and having an axial tapered external thread;
said inner part having at its equator 80 to 110% of the diameter of the outer part.

In other words, the threaded connection parts are made from ceramic, from synthetically produced carbon or graphite, and the threads follow a conical shape. When the parts of a threaded connection are engaged, all nipple thread flanks are in full contact with all electrode socket thread flanks such that there is no inter-flank spacing in a properly tightened joint. The equator of the connecting pin protrudes beyond the end-faces of both connected electrodes, such that facial contact is not possible, thereby allowing full thread engagement in both sockets as described, and ensuring that all electrical current is carried through the connecting pin rather than through a combination of the electrode end-faces and connecting pin.

With the above and other objects in view there is also provided, in accordance with the invention, an electrode column with the above-summarized assembly and with a plurality of the outer parts formed as carbon electrodes and the inner parts formed as connecting pins screwing the electrodes together in an electrode column, and with the assembly forming load-bearing connection that is not susceptible to unscrewing or cracking.

For the purposes of the invention, the columns of carbon electrodes should not be loosened or separated from one another by the flexing moments, vibrations or impacts prevalent in steelworks operation, that the elements remained locked in contact with one another and that the threaded connection bears the load of the lower part of the column in each case, while the nipples hold the electrodes together. Further, the columns of carbon electrodes are not prone to cracking caused by thermal stress because the both, electrodes and nipples, are made from the same material.

It is also provided, in accordance with the invention, an assembly with a threaded (male/ female) connection, comprising carbon electrodes having a machined threaded male surface at one end and a threaded female surface at the opposite end to receive a corresponding male end from the adjacent electrode, where geometrical design parameters preclude end-face contact of the electrodes and the threads of the male and female surfaces are fully engaged and all electrical current must pass through them and not through the end-faces of the electrodes.

Other features which are considered as characteristic for the invention are set forth in the appended claims.

The following definitions are used herein:
The ends of an electrode are also referred to as the *end-faces.*
A *socket* is a coaxial conical depression in the end face of an electrode. (Socket with internal thread = threaded socket).
A *nipple* is a bi-conical screw having an external thread and one end face arranged perpendicularly to the axis of the nipple on either side thereof. A nipple is screwed about halfway into each socket of adjacent electrodes in order to connect the two electrodes.
An electrode or carbon electrode has a threaded socket on at least one end face. In this document, the connection of two electrodes by means of a separate or an integrated nipple always means a threaded electrode connection. For the sake of simplicity, however, the term *electrode joint* is used, in the claims also.

Although the invention is illustrated and described herein as embodied in a threaded connection for carbon and/or graphite electrode columns, it is nevertheless not intended to be limited to the details shown, since various modifications and structural changes may be made therein within the scope and range of equivalents of the claims.

The construction and method of operation of the invention, however, together with additional objects and advantages thereof will be best understood from the following description of specific embodiments when read in connection with the accompanying drawings.

### Brief Description of the Drawings:

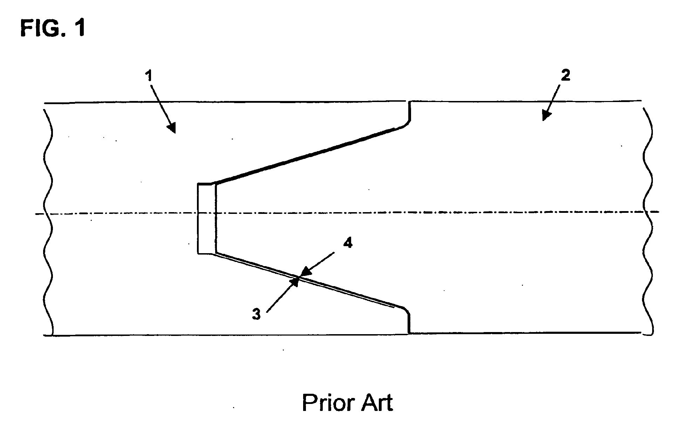

Fig. 1 (Prior Art) is a section taken parallel to the longitudinal axes through electrodes 1 and 2 with a machined threaded male surface (not shown) at one end of the electrode 1 and a threaded female (socket) surface 3 at the opposite end of the electrode 1 to receive a corresponding threaded male end (integrated nipple) surface 4 from the adjacent electrode 2.

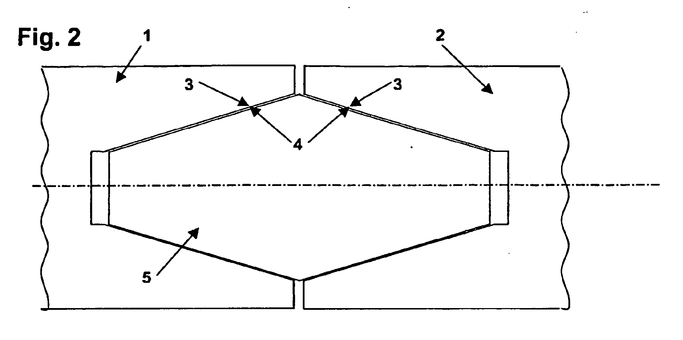

Fig. 2 is a section taken parallel to the longitudinal axes through electrodes 1 and 2, both having opposing threaded female (socket) surfaces 3 with a bi-conical nipple 5 having two threaded male end surfaces 4 screwed into the socket of both electrodes 1 and 2.

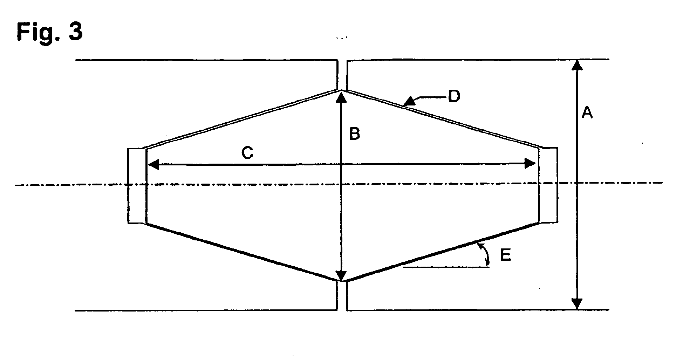

Fig. 3 is a section taken parallel to the longitudinal axes through electrodes 1 and 2, both having opposing threaded female (socket) surfaces 3 with a bi-conical nipple 5 having two threaded male end surfaces 4 screwed into the sockets of both electrodes 1 and 2, describing in more detail essential design features of this invention.

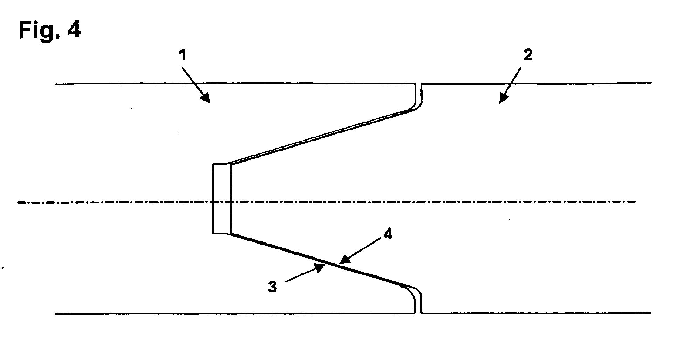

Fig. 4 is a section taken parallel to the longitudinal axes through electrodes 1 and 2 with a machined threaded male surface (not shown) at one end of the electrode 1 and a threaded female (socket) surface 3 at the opposite end of the electrode 1 to receive a corresponding threaded male end (Integrated nipple) surface 4 from the adjacent electrode 2.

This embodiment does not fall under the scope of Claim 1.

### Description of the Preferred Embodiments:

Fig. 1 provides a general view of arrangements of electrodes 1 and 2 according to male/female joint design. The coaxially arranged socket of electrode 1 as well as the male end from the adjacent electrode 2 are furnished with threaded surfaces 3 and 4. Both thread surfaces are fully engaged. The two electrodes 1 and 2 are fully engaged and have facial contact.

In Fig. 2, the hybrid joint design according to this invention is depicted. Both electrodes 1 and 2 have opposing threaded female (socket) surfaces 3 with a bi-conical nipple 5 having two threaded male end surfaces 4 screwed into the socket of both electrodes 1 and 2. The nipple 5 has at its equator a diameter close to that of the connected electrodes 1 and 2. More particularly, the nipple 5 has at its equator a diameter of 80 to 110% of that of the connected electrodes 1 and 2.

Owning to that large nipple 5 diameter, the nipple 5 is made of the same material as the electrodes 1 and 2 because it does not require the increased mechanical strength over the electrodes to keep up with the mechanical stresses and the weight of the electrode column. This allows manufacturing of the nipples 5 from the same feedstock and with much of the same equipment as used for producing electrodes 1 and 2. Further, nipples 5 may be machined from scrapped electrode pieces.

Besides those considerable economic benefits, the utilization of the same material for both, nipple 5 as well as well as electrodes 1 and 2, paves the way to a threaded joint with fully engaged threads because little to no thermal stress in the joint area will occur since there the CTE of nipple 5 and electrodes 1 and 2 is the same.

In turn, this design feature provides a very tight locked connection, hence electrodes are not as easily loosened or separated from one another by mechanical forces as is possible in a conventional connecting pin design. Furthermore, this new design feature provides a much lower electrical and thermal resistance from nipple 5 to electrodes 1 and 2. This effect is a very considerable benefit over the conventional nipple joint design, where the nipple threads are only partially abutting the electrode socket threads and thus the contact between both electrode faces is essential for electrical and thermal conductivity throughout the electrode column. However, due to the extreme thermal load an electrode column is exposed in the arc furnace, the electrodes that would actually elongate in the heat start warping and cracking because free elongation is hindered by their facial contact.

In contrast, thanks to the much lower electrical and thermal resistance from nipple 5 to electrodes 1 and 2 in the joint design of this invention, a facial clearance between electrodes 1 and 2 can be incorporated. Hence, the electrodes 1 and 2 are more able to freely elongate and do not generate additional mechanical stress.

In Fig. 3, several design features of the hybrid joint design according to this invention are depicted in more detail. Both electrodes 1 and 2 have a diameter A. The nipple 5 has at its equator a diameter B of 80 to 110% of the diameter A of the connected electrodes 1 and 2. The nipple length C is defined as the axial face-to-face length of the nipple 5. According to this invention, the ratio of nipple length C to nipple diameter B ranges from 0.5 to 2.0. The thread lead D is measured in threads per inch (TPI). According to this invention, the threads of the threaded female (socket) surfaces 3 and of the two threaded male end surfaces 4 have a thread lead of 6.35 to 12.7 mm (2 to 4 threads per inch). The taper angle E of the threaded female (socket) surfaces 3 and of the two threaded male end surfaces 4 from the centerline of the electrode column can range from approximately 18 to 35 degrees.

Fig. 4 provides a general view of arrangements of electrodes 1 and 2 of a male/female joint design according to this invention. The coaxially arranged socket of electrode 1 as well as the male end (integrated nipple) from the adjacent electrode 2 are furnished with threaded surfaces 3 and 4. Both thread surfaces are fully engaged. The two electrodes 1 and 2 are fully engaged but have no facial contact as the equator of the integrated pin protrudes beyond the end faces of both connected electrodes. As a result, all electrical current must pass through the integrated nipple and not through the end-faces of the electrodes.

### Key to Figures

- 1, 2: carbon electrodes
- 3: threaded surface of electrode socket
- 4: threaded surface of (integrated or separate) nipple
- 5: (separate) nipple
- A: electrode diameter
- B: nipple diameter at its equator
- C: nipple length
- D: thread lead of threaded surfaces
- E: taper angle of the threaded surfaces

## Claims

1. An assembly with a threaded connection, comprising:
an outer part 1,2 made from synthetically produced carbon and having an axial tapered internal threaded female surface 3;
an inner part 5 made from synthetically produced carbon and having an axial tapered external threaded male surface 4; or
an outer part 1,2 made from synthetically produced graphite and having an axial tapered internal threaded female surface 3;
an inner part 5 made from synthetically produced graphite and having an axial tapered external threaded male surface 4;
**characterized in that** said inner part has a diameter B at its equator of 80 to 110% of the diameter A of the outer part, wherein said male surface 4 and said female surface 3 are fully engaged.

2. The assembly according to claim 1, wherein said outer part 1,2 is a carbon electrode with a socket and an Internal threaded female surface 3 formed therein, and said inner part 5 is a carbon nipple with said external threaded male surface 4 for connecting two said electrodes 1,2.

3. The assembly according to claim 1, wherein carbon electrodes 1,2 have a machined threaded male surface 4 at one end and a threaded female surface 3 at the opposite end to receive a corresponding male end from the adjacent electrode, where geometrical design parameters preclude end-face contact of the electrodes 1,2 and the threads 3,4 of the male and female surfaces are fully engaged and all the electrical current must pass through them and not through the end-faces of the electrodes 1,2.

4. The assembly according to claim 1, wherein said internal 3 and external 4 threads have a taper angle E from the centerline of said inner 5 and outer parts 1, 2 of 18 to 35 degrees.

5. The assembly according to claim 1, wherein said internal 3 and external 4 threads have a thread lead D of 6.35 to 12.7 mm (2 to 4 threads per inch).

6. The assembly according to claim 1, wherein said inner part 5 has an axial length C to diameter B ratio from 0.5 to 2.0.

7. The assembly according to claim 1, where geometrical design parameters preclude end-face contact of the outer parts 1, 2 such that the threads 3, 4 of the male and female surfaces are fully engaged and all electrical current must pass through the inner part 5 and not through the end-faces of the outer parts 1, 2.

8. An electrode column, comprising the assembly according to claim 1 with a plurality of said outer parts 1, 2 formed as carbon electrodes and said inner parts 5 formed as nipples screwing said electrodes 1, 2 together to an electrode column, and with the assembly forming a load-bearing connection that is not susceptible to unscrewing and cracking.

## Patentansprüche

1. Anordnung mit Gewindeverbindung, Folgendes umfassend:
einen äußeren Teil 1, 2 aus synthetisch hergestelltem Kohlenstoff mit einer axial konischen, mit Innengewinde versehenen Aufnahmeoberfläche 3;
einen inneren Teil 5 aus synthetisch hergestelltem Kohlenstoff mit einer axial konischen, mit Außengewinde versehenen Einsteckoberfläche 4; oder
einen äußeren Teil 1, 2 aus synthetisch hergestelltem Graphit mit einer axial konischen, mit Innengewinde versehenen Aufnahmeoberfläche 3;
einen inneren Teil 5 aus synthetisch hergestelltem Kohlenstoff mit einer axial konischen, mit Außengewinde versehenen Einsteckoberfläche 4;
**dadurch gekennzeichnet, dass** der innere Teil an seinem Äquator einen Durchmesser B hat, der 80 bis 110% des Durchmessers A des äußeren Teils beträgt, wobei die Einsteckoberfläche 4 und die Aufnahmeoberfläche 3 vollständig im Eingriff sind.

2. Anordnung nach Anspruch 1, wobei der äußere Teil 1, 2 eine Kohlenstoffelektrode mit einer Aufnahme und einer darin ausgeformten, mit Innengewinde versehenen Aufnahmeoberfläche 3 ist und der innere Teil 5 ein Kohlenstoffstift mit der mit Außengewinde versehenen Einsteckoberfläche 4 ist, um die beiden Elektroden 1, 2 zu verbinden.

3. Anordnung nach Anspruch 1, wobei die Kohlenstoffelektroden 1, 2 an einem Ende eine mit einem bearbeiteten Gewinde versehene Einsteckoberfläche 4 und an dem gegenüberliegenden Ende eine mit Innengewinde versehene Aufnahmeoberfläche 3 aufweisen, um ein entsprechendes Einsteckende von der daran anliegenden Elektrode aufzunehmen, wobei geometrische Gestaltungsparameter den Kontakt zwischen Endoberflächen der Elektroden 1, 2 verhindern, die Gewinde 3, 4 der Einsteck- und Aufnahmeoberflächen vollständig im Eingriff sind und der gesamte elektrische Strom durch diese hindurch und nicht durch die Endoberflächen der Elektroden 1, 2 fließen muss.

4. Anordnung nach Anspruch 1, wobei das Innengewinde 3 und das Außengewinde 4 einen Kegelwinkel E zur Mittellinie der inneren Teile 5 und der äußeren Teile 1, 2 haben, der 18-35° beträgt.

5. Anordnung nach Anspruch 1, wobei das Innengewinde 3 und das Außengewinde 4 eine Gewindesteigung D von 6,35 bis 12,7 mm (2-4 Gängen pro Zoll) aufweisen.

6. Anordnung nach Anspruch 1, wobei der innere Teil 5 ein Verhältnis zwischen Axiallänge C und Durchmesser B von 0,5 bis 2,0 aufweist.

7. Anordnung nach Anspruch 1, wobei geometrische Gestaltungsparameter den Kontakt zwischen Endoberflächen der äußeren Teile 1, 2 derart verhindern, dass die Gewinde 3, 4 der Einsteck- und Aufnahmeoberflächen vollständig im Eingriff sind und der gesamte elektrische Strom durch den inneren Teil 5 und nicht durch die Endoberflächen der äußeren Teile 1, 2 fließen muss.

8. Elektrodenstab, umfassend die Anordnung nach Anspruch 1 mit mehreren äußeren Teilen 1, 2, ausgebildet als Kohlenstoffelektroden, und inneren Teilen 5, ausgebildet als Stifte, die die Elektroden 1, 2 zu einem Elektrodenstab zusammenschrauben, wobei die Anordnung eine tragende Verbindung ausbildet, die nicht zum Lösen der Schraubverbindung oder zu Rissen neigt.

## Revendications

1. Ensemble doté d'un raccord fileté, comprenant :
une partie externe 1, 2 constituée de carbone produit synthétiquement et ayant une surface femelle filetée interne effilée et axiale 3 ;
une partie interne 5 constituée de carbone produit synthétiquement et ayant une surface mâle filetée externe effilée et axiale 4 ; ou
une partie externe 1, 2 constituée de graphite produit synthétiquement et ayant une surface femelle filetée interne effilée et axiale 3 ;
une partie interne 5 constituée de graphite produit synthétiquement et ayant une surface mâle filetée externe effilée et axiale 4 ;
**caractérisé en ce que** ladite partie interne a un diamètre B à son équateur de 80 à 110 % du diamètre A de la partie externe, dans lequel ladite surface mâle 4 et ladite surface femelle 3 sont entièrement enclenchées.

2. Ensemble selon la revendication 1, dans lequel ladite partie externe 1, 2 est une électrode de carbone dotée d'une douille et d'une surface femelle filetée interne 3 formée à l'intérieur, et ladite partie interne 5 est un mamelon de carbone doté de ladite surface mâle filetée externe 4 pour raccorder les deux dites électrodes 1, 2.

3. Ensemble selon la revendication 1, dans lequel les électrodes de carbone 1, 2 ont une surface mâle filetée usinée 4 à une extrémité et une surface femelle filetée 3 à l'extrémité opposée pour recevoir une extrémité mâle correspondante de l'électrode adjacente, où des paramètres de conception géométrique empêchent un contact des faces d'extrémité des électrodes 1, 2 et les filetages 3, 4 des surfaces mâle et femelle sont entièrement enclenchés et tout le courant électrique doit les traverser et non pas traverser les faces d'extrémité des électrodes 1, 2.

4. Ensemble selon la revendication 1, dans lequel lesdits filetages interne 3 et externe 4 ont un angle de conicité E par rapport à l'axe central desdites parties interne 5 et externe 1, 2 de 18 à 35 degrés.

5. Ensemble selon la revendication 1, dans lequel lesdits filetages interne 3 et externe 4 ont un pas de filetage D de 6,35 à 12,7 mm (2 à 4 filets par pouce).

6. Ensemble selon la revendication 1, dans lequel ladite partie interne 5 a un rapport entre la longueur axiale C et le diamètre B de 0,5 à 2,0.

7. Ensemble selon la revendication 1, dans lequel des paramètres de conception géométrique empêchent un contact des faces d'extrémité des parties externes 1, 2 de telle sorte que les filetages 3, 4 des surfaces mâle et femelle soient entièrement enclenchés et que la totalité du courant électrique doive traverser la partie interne 5 et non pas traverser les faces d'extrémité des parties externes 1, 2.

8. Colonne d'électrodes, comprenant l'ensemble selon la revendication 1 avec une pluralité desdites parties externes 1, 2 formées comme des électrodes de carbone et lesdites parties internes 5 formées comme des mamelons vissant lesdites électrodes 1, 2 ensemble sur une colonne d'électrodes, et avec l'ensemble formant un raccord porteur de charge qui n'est pas susceptible de se dévisser et de se fissurer.
